# DEMANDE DE BREVET EUROPEEN

(11) **EP 1 703 200 A1**
(43) Date de publication de la demande: **20.09.2006**
(21) Numéro de dépôt: 06290400.8
(22) Date de dépôt: 10.03.2006
(51) Int. Cl.: F21V 17/00, B29C 65/02

(54) **Procédé de fixation glace-boîtier pour dispositif d'éclairage et/ou de signalisation et dispositif obtenu.**

(30) Priorité: 15.03.2005 FR 0502550
(71) Demandeur: VALEO VISION, 93012 Bobigny Cédex (FR)
(72) Inventeur: Fuentes, Francisco, 23600 Martos (ES); Acuna, Rocio, 23600 Martos (Jaen) (ES); Lara Alberto, 23650 Torredonj (ES)

(57) **Abrégé**

Le procédé selon l'invention pour fixer la glace au boîtier dans un dispositif d'éclairage et/ou signalisation pour véhicule automobile est caractérisé en ce qu'il comprend les étapes consistant à déposer (E1) une colle non totalement durcie dans une gorge de collage du boîtier, déterminer (E2) une position relative de la glace par rapport au boîtier, appliquer (E3) la glace sur le boîtier en insérant un pied de la glace dans la gorge contenant la colle, et réaliser (E4) au moins un élément localisé de fixation mécanique additionnelle de la glace sur le boîtier au moyen d'une opération de thermofusion et matriçage. L'élément localisé de fixation mécanique additionnelle a une forme extérieure prédéterminée qui est conférée par le matriçage. L'étape de réalisation d'élément localisé de fixation mécanique additionnelle (E4) permet d'obtenir une fixation mécanique suffisante de la glace au boîtier pour garantir la position relative de la glace par rapport au boîtier pendant au moins une durée nécessaire au durcissement de la colle.

## Description

L'invention concerne le domaine des dispositifs d'éclairage et/ou signalisation pour véhicule automobile, du type feu ou projecteur. De façon connue en soi, ce type de dispositif comprend un certain nombre d'éléments à fonction optique, comme des sources lumineuses, des composants dioptriques du type lentilles, des écrans, des masques, des réflecteurs, des éléments de connexion électrique. Ces composants sont disposés dans un boîtier, qui est fermé par une glace, munie ou non de stries, qui est en verre, ou, plus couramment désormais, à base de matériau polymère du type polycarbonate ou poly méthacrylate de méthyle.

L'invention s'intéresse plus particulièrement à la fixation de la glace au boîtier et notamment à une fixation de la glace au boîtier qui permette de satisfaire à des contraintes dimensionnelles serrées.

Il est connu dans l'état de la technique de prévoir, le long du bord du boîtier où la glace doit être fixée, ce qu'on appelle une gorge de collage qui définit une gouttière destinée à recevoir une colle dite structurale.

Cette colle structurale a généralement une double propriété, à savoir : la propriété d'assurer l'étanchéité du dispositif à l'eau sous toutes ses formes, et la propriété de solidariser efficacement la glace au boîtier. Ce type de colle est déposé dans la gorge sous forme d'une pâte de viscosité appropriée, et on vient ensuite disposer le bord de la glace dans la gorge, de façon à ce qu'il soit entièrement recouvert par la colle sur son chant et ses deux faces, sur une hauteur suffisante. La colle a ensuite quelques minutes pour durcir et fixer définitivement la glace.

Or ce laps de temps, entre le moment où on dispose la glace dans la gorge de collage et celui où la colle a durci, est une période délicate : en effet, il faut que la glace soit initialement correctement positionnée dans la gorge, et qu'elle garde son positionnement correct jusqu'au durcissement de la colle. Pour cela, on peut avoir recours à des moyens d'appui et de positionnement prévus sur le boîtier et/ou sur la glace : par exemple on prévoit au niveau du pied de glace (le « pied » de glace étant la zone de la glace destinée à être fixée au boîtier) une zone protubérante venant coopérer avec un des bords de la gorge de collage du boîtier. Il s'est avéré que ce type de moyens pouvait se révéler insuffisant notamment lorsque les contraintes dimensionnelles à tenir sont serrées.

Par le document DE-4414901, il est connu un dispositif d'éclairage pour véhicule automobile comprenant des éléments additionnels de fixation mécanique destinés à assurer une fixation mécanique rapide de la glace au boîtier pendant le laps de temps nécessaire au durcissement de la colle structurale. Ces éléments additionnels remplissent leur fonction de fixation par le biais du dépôt local d'une colle rapide à faible durée de durcissement. Cette technique présente néanmoins l'inconvénient de demander un apport de matière supplémentaire sous la forme de la colle rapide utilisée.

Il est également connu de l'entité inventive la demande de brevet français N° 0413525 déposée le 17 décembre 2004 par la présente Demanderesse, et non publiée à ce jour.

Cette demande de brevet français N° 0413525 divulgue un dispositif d'éclairage et/ou signalisation pour véhicule automobile dans lequel une fixation mécanique additionnelle est obtenue au moyen d'une technique de soudage par rayonnement laser. Cette technique de soudage par rayonnement laser présente entre autres comme avantage de ne requérir aucun apport de matière supplémentaire.

Les techniques sans apport de matière supplémentaire présentent un intérêt particulier notamment sur le plan d'une moindre complexité des processus et de la maîtrise des coûts.

Bien que la technique de soudage par rayonnement laser de la Demanderesse, mentionnée ci-dessus, donne entière satisfaction quant à la fixation mécanique obtenue, il est toujours souhaitable dans ce domaine technique de proposer des améliorations et d'offrir à l'homme du métier de nouvelles solutions autorisant une plus grande liberté dans le choix des techniques utilisables pour la fabrication des dispositifs. En effet, un plus grand choix dans les techniques disponibles ne peut que favoriser une conception plus optimale des dispositifs.

Par ailleurs, la demande du marché de l'automobile pour des véhicules dans lesquels le style prend une place croissante impose aux fabricants des dispositifs d'éclairage et/ou signalisation non seulement des contraintes dimensionnelles serrées mais aussi des contraintes de forme, d'aspect et de finition qui sont de plus en plus lourdes.

Pour certaines applications, notamment dans des véhicules automobiles de haut de gamme, mais non exclusivement, les techniques antérieures exposées brièvement ci-dessus peuvent s'avérer insuffisantes pour satisfaire aux contraintes imposées par les constructeurs automobiles.

Par exemple, concernant la solution proposée par le document DE-4414901, on notera que la colle rapide utilisée peut couler et dégrader l'aspect extérieur des dispositifs. De plus, il est très difficile avec cette technique de garantir la forme finale des gouttes de colle après durcissement. Il peut donc en résulter non seulement des défauts d'aspect mais aussi des débordements dimensionnels susceptibles de poser des difficultés lors de l'intégration du dispositif dans le véhicule automobile.

La présente invention a pour principal objectif de fournir un procédé sans apport de matière pour la fixation d'une glace au boîtier d'un dispositif d'éclairage et/ou signalisation pour véhicule automobile, le procédé autorisant une maîtrise de la forme, de l'aspect et de la finition des éléments de fixation mécanique réalisés.

Le procédé selon l'invention de fixation d'une glace au boîtier d'un dispositif d'éclairage et/ou signalisation pour véhicule automobile, le procédé étant mis en oeuvre lors de la fabrication du dispositif, est caractérisé en ce qu'il comprend les étapes de :
- déposer une colle non totalement durcie dans une gorge de collage dudit boîtier ;
- déterminer une position relative de la glace par rapport au boîtier ;
- appliquer la glace sur le boîtier en insérant un pied de la glace dans la gorge contenant la colle ; et
- réaliser au moins un élément localisé de fixation mécanique additionnelle de la glace sur le boîtier au moyen d'une opération de thermofusion et matriçage, l'élément localisé de fixation mécanique additionnelle ayant une forme extérieure prédéterminée conférée par le matriçage ;
l'étape de réalisation d'élément localisé de fixation mécanique additionnelle permettant d'obtenir une fixation mécanique suffisante de la glace au boîtier pour garantir la position relative de la glace par rapport au boîtier pendant au moins une durée nécessaire au durcissement de la colle.

Au sens de l'invention, on comprend par « durcit » le fait que la colle puisse changer d'état, se modifier notamment par réticulation et/ou polymérisation du ou des polymères qu'elle contient. Plus généralement, ce terme implique que la colle puisse acquérir les caractéristiques mécaniques nécessaires à l'immobilisation complète de la glace sur le boîtier.

Il peut aussi être envisagé que cette colle n'assume pas, ou pas totalement un rôle de moyen de fixation définitive de la glace sur le boîtier, et que, notamment, il y soit suppléé au moins en partie par le ou les éléments localisés de fixation mécanique additionnelle en question, qui, de fait, sont utilisés également pour la fixation définitive de la glace et du boîtier.

L'invention propose donc de prévoir un maintien en position de la glace dans le boîtier tant que la colle ne remplit pas encore son rôle de fixation, ce qui permet d'éviter tout mouvement relatif intempestif entre la glace et le boîtier pendant cette période de temps, qui est généralement, selon la colle choisie, de l'ordre de plusieurs minutes.

Selon d'autres caractéristiques particulières de l'invention, la thermofusion intervenant pendant l'étape de réalisation d'élément localisé de fixation mécanique additionnelle est obtenue au moyen d'ondes ultrasonores et/ou d'une résistance chauffante et/ou d'un rayonnement laser et/ou d'un rayonnement infrarouge.

Selon une autre caractéristique particulière de l'invention, l'étape de réalisation d'élément localisé de fixation mécanique additionnelle comporte une sous-étape de refroidissement après l'opération de thermofusion de l'élément localisé de fixation mécanique additionnelle.

Selon encore une autre caractéristique particulière de l'invention, la sous-étape de refroidissement fait appel à un flux d'air froid.

Corrélativement, l'invention fournit un dispositif d'éclairage et/ou signalisation pour véhicule automobile obtenu par la mise en oeuvre du procédé selon l'invention décrit brièvement ci-dessus.

Le dispositif d'éclairage et/ou signalisation pour véhicule automobile, du type projecteur, selon l'invention comporte un boîtier et une glace assemblés mécaniquement par collage, la glace ayant un pied de glace inséré et fixé par collage dans une gorge du boîtier, et au moins un élément localisé assurant une fixation mécanique additionnelle entre le boîtier et le glace, et est caractérisé en ce que
l'élément localisé de fixation mécanique additionnelle assure la fixation mécanique additionnelle entre le boîtier et la glace sans apport de matière autre que celles des boîtier et glace et comprend une portion obtenue par une opération de thermofusion et matriçage,
la portion ayant une forme extérieure prédéterminée conférée par l'opération de thermofusion et matriçage et étant apte à garantir la fixation mécanique additionnelle entre le boîtier et la glace.

De préférence, l'élément localisé de fixation mécanique additionnelle est situé au niveau d'une jonction de collage entre la glace et le boîtier. Lorsque le dispositif comprend une pluralité d'éléments localisés de fixation mécanique additionnelle, ceux-ci peuvent avantageusement être répartis sur un contour du boîtier au niveau de la jonction de collage.

Selon d'autres caractéristiques de l'invention, l'élément localisé de fixation mécanique additionnelle comprend également un tenon venu de matière de la glace. La portion thermofondue-matricée fait partie intégrante du boîtier et entoure le tenon dans une relation apte à garantir la fixation mécanique additionnelle entre le boîtier et la glace.

Selon une autre caractéristique, le tenon a une surface extérieure et/ou une forme extérieure facilitant un accrochage mécanique avec la portion thermofondue-matricée.

Selon une forme de réalisation particulière, le dispositif selon l'invention comprend également au moins un élément encliquetable assurant une fixation mécanique additionnelle entre le boîtier et la glace. L'élément encliquetable peut comporter une portion collée au moyen d'une colle à durcissement rapide, cette portion collée s'opposant à un désengagement de l'élément encliquetable et corrélativement à une séparation du boîtier et de la glace.

Selon une forme de réalisation préférée du dispositif selon l'invention, le boîtier est réalisé dans un matériau à base de polypropylène (PP) et la glace est réalisée dans un matériau à base de polycarbonate (PC).

Selon d'autres formes de réalisation particulières du dispositif selon l'invention, le boîtier et la glace sont réalisés dans des matériaux compatibles pour une soudure au moins partielle par thermofusion.

D'autres aspects et avantages de la présente l'invention apparaîtront plus clairement à la lecture de la description de modes de réalisation particuliers qui va suivre, cette description étant donnée à titre d'exemple non limitatif et faite en référence aux dessins annexés, dans lesquels :
La Fig.1 montre un projecteur selon l'invention en vue de face, côté glace ;
La Fig.2 est une vue partielle montrant une forme de réalisation particulière d'un élément thermofondu-matricé prévu dans l'invention pour assurer une fixation mécanique additionnelle de la glace sur le boîtier du projecteur ;
La Fig.3 est une vue partielle montrant une forme de réalisation particulière d'un élément encliquetable prévu dans l'invention pour assurer une fixation mécanique additionnelle de la glace sur le boîtier du projecteur ;
La Fig.4 est un bloc-diagramme de processus montrant les principales étapes du procédé selon l'invention ;
La Fig.5 est une vue partielle montrant en perspective la glace en position sur le boîtier, avant une opération de thermofusion-matriçage destinée à réaliser l'élément thermofondu-matricé de la Fig.2 ; et
La Fig.6 est une vue partielle en perspective montrant l'application d'un outil de thermofusion-matriçage sur des languettes en U du boîtier lors de l'opération de thermofusion-matriçage destinée à réaliser l'élément thermofondu-matricé de la Fig.2.

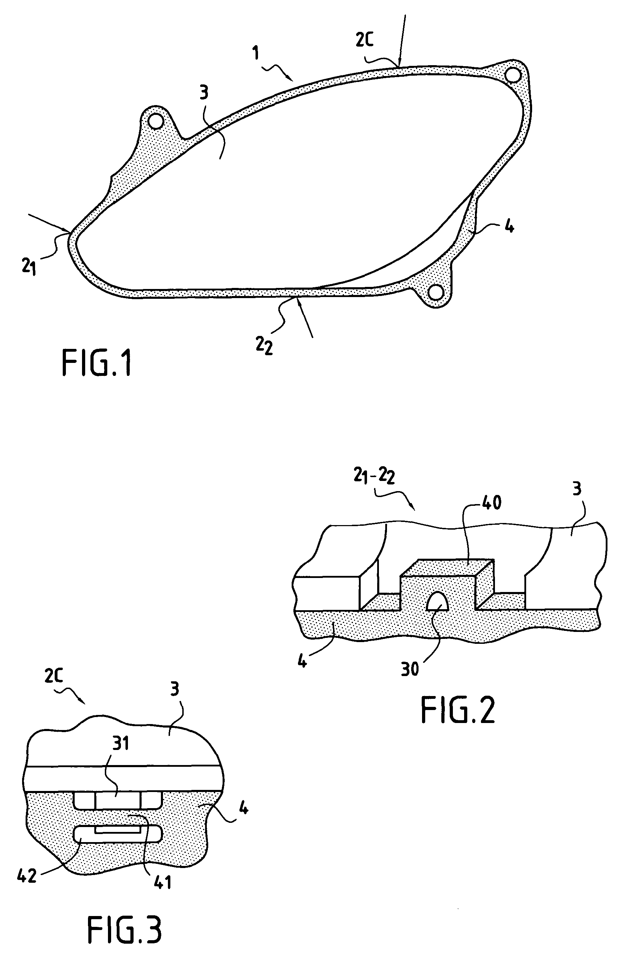

Comme montré à la Fig.1, pour un dispositif d'éclairage et/ou signalisation selon l'invention réalisé sous la forme d'un projecteur 1, il est prévu aux emplacements cerclés et indiqués par des flèches, deux éléments localisés de fixation mécanique additionnelle 2₁ et 2₂ de type thermofondu-matricé et un élément localisé 2C de type encliquetable. Les éléments localisés 2₁, 2₂ et 2C sont répartis autour de la glace 3, au niveau de la jonction de celle-ci avec le boîtier 4.

Les éléments localisés 2₁, 2₂ et 2C permettent une fixation mécanique additionnelle d'une glace 3 sur un boîtier 4 du projecteur 1. La fixation mécanique additionnelle apportée par les éléments 2₁, 2₂ et 2C permet le maintien d'une position relative entre la glace 3 et le projecteur 4, au moins pendant la durée de durcissement de la colle structurale assurant une liaison mécanique permanente et étanche entre la glace 3 et le boîtier 4.

Les Figs.2 et 3 montrent des exemples de réalisation des éléments localisés 2₁, 2₂ et 2C.

Dans l'exemple de réalisation de la Fig.2, l'élément localisé 2₁, 2₂ est formé essentiellement d'un tenon 30 et d'une portion thermofondue-matricée 40.

Le tenon 30 est un élément venu de matière de la glace 3. Typiquement, la glace 3 est fabriquée par moulage par injection d'un matériau à base de polycarbonate (PC).

La portion thermofondue-matricée 40 fait partie intégrante du boîtier 4 et entoure étroitement la tenon 30 de manière à assurer la fixation mécanique additionnelle voulue entre la glace 3 et le boîtier 4.

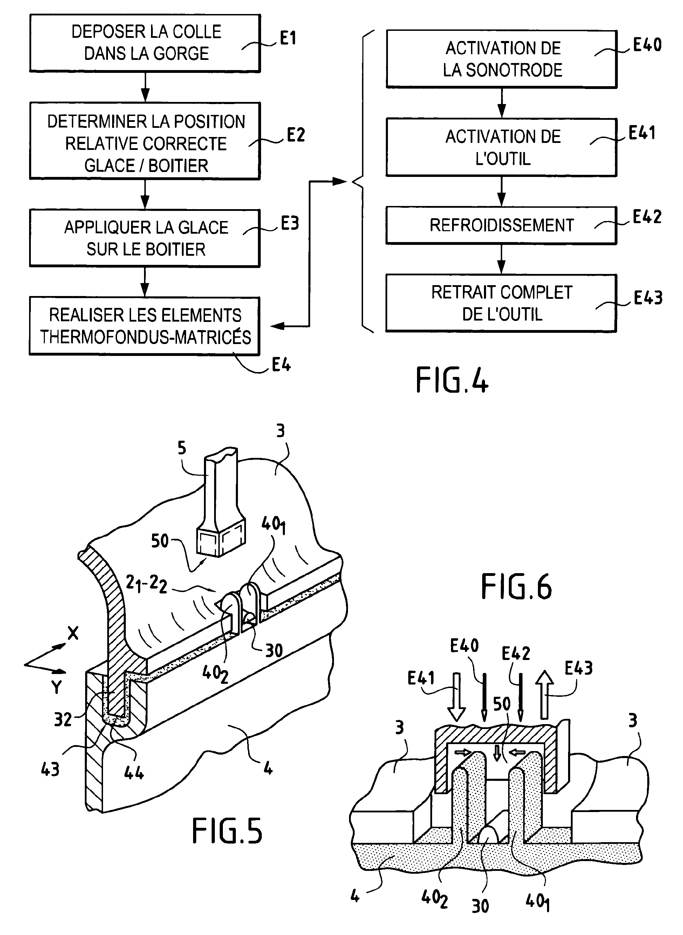

Comme cela apparaîtra plus clairement par la suite dans la description, la portion thermofondue-matricée 40 est obtenue par thermofusion et matriçage du matériau constituant le boîtier 4. Dans cet exemple de réalisation, le matériau constituant la portion 40 est apporté par des languettes en U 40₁ et 40₂ (Figs.5 et 6) se prolongeant depuis un chant du boîtier 4.

Typiquement, le boîtier 4 est fabriqué par moulage par injection d'un matériau à base de polypropylène (PP).

Dans l'exemple de réalisation de la Fig.2, la portion thermofondue-matricée 40 a une forme extérieure en créneau globalement parallélépipédique. Cette forme en créneau est conférée à la portion 40 par l'outil de thermofusion-matriçage utilisé lors la réalisation de l'élément 2₁, 2₂.

Selon les dispositifs selon l'invention, il est possible de réaliser différents types de liaison mécanique entre le tenon 30 et la portion thermofondue-matricée 40.

Dans le cas où une liaison mécanique sans aucun degré de liberté est voulue, l'homme du métier choisira pour le tenon 30 une forme adaptée à la liaison et compatible aussi avec le démoulage de la glace 3. La surface extérieure du tenon 30 peut également être prévue de telle manière à favoriser l'accrochage de la portion thermofondue-matricée 40.

Par ailleurs, lorsque les matériaux utilisées ont entre eux la compatibilité nécessaire, l'invention autorise une soudure au moins partielle par thermofusion à la jonction entre le tenon 30 et la portion thermofondue-matricée 40.

Bien entendu, même lorsque la liaison mécanique entre le tenon 30 et la portion thermofondue-matricée 40 conserve une certaine marge de liberté, l'homme du métier obtiendra néanmoins une fixation mécanique sans aucun degré de liberté entre la glace 3 et le boîtier 4 répartissant autour de la glace 3 des éléments localisés s'opposant mutuellement à leurs marges de liberté respectives.

Dans l'exemple de réalisation de la Fig.3, l'élément localisé 2C comporte essentiellement un clip 31 et une languette de retenue 41.

Comme cela apparaît à la Fig.3, le clip 31 est un prolongement de la glace 3 à partir d'un chant de celle-ci. La languette de retenue 41 est aménagée dans un logement 42 du boîtier 4. Le logement 42 autorise une insertion du clip 31 dont le retrait est ensuite empêché par la languette 41.

Dans certains dispositifs de l'invention, il peut s'avérer intéressant d'apporter une sécurisation à la liaison mécanique par clip fournie par l'élément localisé 2C, par exemple, au moyen de l'application d'une colle à durcissement rapide.

Conformément à l'invention, l'utilisation combinée d'éléments localisés de type thermofondu-matricé 2₁, 2₂ et de type encliquetable 2C autorise une certaine souplesse lors de la conception de la fixation mécanique additionnelle que doivent apporter les éléments localisés.

En effet, en pratique, il peut parfois s'avérer délicat de réaliser un élément localisé thermofondu-matricé 2₁, 2₂ à un emplacement déterminé du projecteur 1 demandant une fixation mécanique. Un tel cas peut survenir par exemple lorsqu'un espace de dégagement est insuffisant pour le passage de l'outil de thermofusion-matricage. Conformément à l'invention, un élément localisé encliquetable 2C peut alors être utilisé de manière avantageuse.

Un autre avantage de l'élément localisé encliquetable 2C réside dans le fait qu'il procure une préfixation mécanique instantanée, dès la mise en place de la glace 3 sur le boîtier 4.

On notera aussi concernant cette caractéristique de l'invention que l'utilisation d'éléments localisés encliquetables 2C peut contribuer à réduire le temps machine de l'opération de thermofusion-matriçage lorsque les éléments localisés thermofondus-matricés 2₁, 2₂ sont réalisés de manière séquentielle, par réduction du nombre desdits éléments. Un compromis pourra être trouvé au cas par cas par l'homme du métier.

En référence aux Figs.4 à 6, il est maintenant décrit un mode de réalisation particulier du procédé selon l'invention dans lequel l'opération de thermofusion-matriçage est réalisée par ultrasons à l'aide d'un outil de thermofusion-matriçage 5 équipé d'une sonotrode.

En référence plus particulièrement à la Fig.4, le procédé selon l'invention comporte essentiellement des étapes E1 à E4.

A l'étape E1, une colle structurale 44 est déposée dans une gorge 43 du boîtier 4. La colle 44 et la gorge 43 apparaissent à la Fig.5.

A l'étape E2, il est déterminé une position relative correcte de la glace 3 par rapport au boîtier 4 dans un plan de jonction XY de ces pièces. Le plan de jonction XY est montré à la Fig.5.

A l'étape E3, la glace 3 est appliquée sur le boîtier 4 en insérant un pied 32 de la glace 3 dans la gorge 43 et en conservant la position relative correcte déterminée à l'étape E2 entre la glace 3 et le boîtier 4. Lors de l'application de la glace 3 sur le boîtier 4, le clip 31 de l'élément localisé encliquetable 2C se verrouille sur la languette de retenue 41 correspondante.

La relation d'assemblage obtenue entre la glace 3 et le boîtier 4 à l'issue de l'étape E3 est montré à la Fig.5. Le pied 32 de la glace 3 est alors logé dans la gorge 43 du boîtier 4 et la colle structurale 44 non durcie occupe un espace de jonction entre la glace 3 et le boîtier 4. De plus, le tenon 30 de chacun des éléments localisés 2₁, 2₂ de la glace 3 est correctement placés entre des languettes en U 40₁, 40₂ présentes sur un chant du boîtier 4.

A l'étape E4, les éléments localisés thermofondus-matricés 2₁, 2₂ sont réalisés au moyen de l'outil de thermofusion-matriçage 5. Un seul outil 5 est prévu dans cette mise en oeuvre décrite du procédé selon l'invention, de sorte que les éléments localisés thermofondus-matricés 2₁, 2₂ sont réalisés de manière séquentielle. Bien évidemment, pour réduite le temps machine, d'autres outils 5 pourront être prévus de manière à réaliser simultanément plusieurs éléments localisés tels que 2₁, 2₂, par exemple dans des projecteurs demandant un nombre plus important d'éléments localisés.

L'étape E4 comprend essentiellement les sous-étapes E40 à E43 qui sont maintenant plus particulièrement décrites en référence aux Figs.4 et 6.

A la Fig.6, l'outil 5 est représenté en coupe, de manière partielle.

A l'étape E40, la sonotrode (non représentée) équipant l'outil 5 est activée et génère des ultrasons. L'activation de la sonotrode peut être déclenchée un certain temps avant le contact effectif de l'outil 5 sur les languettes en U 40₁, 40₂ de manière favoriser une montée en température.

A l'étape E41, l'outil 5 est appliqué sur les languettes en U 40₁, 40₂. Les languettes en U 40₁, 40₂ sont alors présentes dans une cavité de thermofusion-matriçage 50 dans laquelle sont émises les ultrasons. Les ultrasons provoquent la thermofusion des languettes 40₁, 40₂. Cette thermofusion des languettes 40₁, 40₂ autorise une application complète de l'outil 5 jusqu'à un stade où la cavité de thermofusion-matriçage 50 est remplie par le matériau thermofondu des languettes 40₁, 40₂ . La cavité de thermofusion-matriçage 50 confère au matériau thermofondu la forme extérieure voulue pour la portion 40 (Fig.2) de l'élément localisé 2₁, 2₂.

A l'étape E42, un flux d'air froid est projeté sur le matériau formant la portion 40 de manière à accélérer le durcissement de celui-ci par refroidissement.

A l'étape E43, l'outil 5 est totalement retiré de l'élément localisé 2₁, 2₂. La réalisation de l'élément localisé 2₁, 2₂ est achevée. Le tenon 30 est alors étroitement entouré par le matériau de la portion 40 et est prisonnier de celle-ci, de telle manière que la fixation mécanique additionnelle de la glace 3 sur le boîtier 4 est ainsi au moins partiellement assurée, la fixation mécanique additionnelle complète étant obtenue après la réalisation de tous les éléments localisés 2₁, 2₂.

Bien entendu, la présente invention ne se limite pas aux détails des formes et modes de réalisation décrits ici à titre d'exemple, mais s'étend au contraire aux modifications à la portée de l'homme du métier sans sortir du cadre de l'invention.

Ainsi, par exemple, il est dans les compétences normales de l'homme du métier, instruit par les enseignements de la présente demande, que de concevoir un outil de thermofusion-matriçage ne faisant pas appel à des ondes ultrasonores pour provoquer la thermofusion, mais faisant appel à d'autres moyens connus tels qu'une résistance chauffante, un rayonnement laser, un rayonnement infrarouge ou autres.

Il est clair aussi que les éléments localisés thermofondus-matricés 2₁, 2₂ peuvent prendre différentes configurations dictées à l'homme du métier par les dispositifs d'éclairage et/ou signalisation particuliers qu'il peut être amené à développer, et ne se limitent donc pas à la configuration tenon 30 / portion 40 décrite ici seulement à titre d'exemple. Ainsi, par exemple, les éléments localisés thermofondus-matricés 2₁, 2₂ pourraient très bien être réalisés sous la forme de rivets.

Par ailleurs, on notera également que l'invention autorise dans certain cas le choix d'une colle 44 autre que celle dite structurale usuellement utilisée. En effet, en réalisant un nombre adéquat d'éléments localisés thermofondus-matricés 2₁, 2₂, ceux-ci sont aptes à assurer tout ou partie de la fixation mécanique aussi bien additionnelle que définitive entre le boîtier 3 et la glace 4. On peut alors remplacer la colle structurale coûteuse et nécessitant un temps de durcissement par une colle de type mastic, ou composé de silicone, remplissant essentiellement une fonction d'étanchéité.

## Revendications

1. Procédé de fixation d'une glace (3) au boîtier(4) d'un dispositif d'éclairage et/ou signalisation pour véhicule automobile, ledit procédé étant mis en oeuvre lors de la fabrication dudit dispositif, **caractérisé en ce qu'**il comprend les étapes de :
- déposer (E1) une colle (44) non totalement durcie dans une gorge de collage (43) dudit boîtier (4) ;
- déterminer (E2) une position relative de ladite glace (3) par rapport audit boîtier (4) ;
- appliquer (E3) ladite glace (3) sur ledit boîtier (4) en insérant un pied (32) de ladite glace (3) dans ladite gorge (43) contenant ladite colle (44) ; et
- réaliser (E4) au moins un élément localisé de fixation mécanique additionnelle (2₁, 2₂) de ladite glace (3) sur ledit boîtier (4) au moyen d'une opération de thermofusion et matriçage, ledit élément localisé de fixation mécanique additionnelle (2₁, 2₂) ayant une forme extérieure prédéterminée conférée par ledit matriçage ;
ladite étape de réalisation d'élément localisé de fixation mécanique additionnelle (E4) permettant d'obtenir une fixation mécanique suffisante de ladite glace (3) audit boîtier (4) pour garantir ladite position relative de ladite glace (3) par rapport audit boîtier (4) pendant au moins une durée nécessaire au durcissement de ladite colle (44).

2. Procédé selon la revendication 1, **caractérisé en ce que** ladite thermofusion intervenant pendant ladite étape de réalisation d'élément localisé de fixation mécanique additionnelle (E4) est obtenue au moyen d'une résistance chauffante et/ou d'ondes ultrasonores et/ou d'un rayonnement laser et/ou d'un rayonnement infrarouge.

3. Procédé selon la revendication 1 ou 2, **caractérisé en ce que** ladite étape de réalisation d'élément localisé de fixation mécanique additionnelle (E4) comporte une sous-étape de refroidissement après thermofusion (E42) dudit élément localisé de fixation mécanique additionnelle (2₁, 2₂).

4. Procédé selon la revendication 3, **caractérisé en ce que** ladite sous-étape de refroidissement (E42) fait appel à un flux d'air froid.

5. Dispositif d'éclairage et/ou signalisation pour véhicule automobile, du type projecteur, obtenu par la mise en oeuvre du procédé selon l'une quelconque des revendications 1 à 4, comportant un boîtier (4) et une glace (3) assemblés mécaniquement par collage, ladite glace (3) ayant un pied de glace (32) inséré et fixé par collage dans une gorge (43) dudit boîtier (4), et au moins un élément localisé (2₁, 2₂) assurant une fixation mécanique additionnelle entre ledit boîtier (4) et ladite glace (3), **caractérisé en ce que**
ledit élément localisé de fixation mécanique additionnelle (2₁, 2₂) assure ladite fixation mécanique additionnelle entre ledit boîtier (4) et ladite glace (3) sans apport de matière autre que celles desdits boîtier (4) et glace (3) et comprend une portion (40) obtenue par une opération de thermofusion et matriçage,
ladite portion (40) ayant une forme extérieure prédéterminée conférée par ladite opération de thermofusion et matriçage et étant apte à garantir ladite fixation mécanique additionnelle entre ledit boîtier (4) et ladite glace (3).

6. Dispositif d'éclairage et/ou signalisation selon la revendication 5, **caractérisé en ce que** ledit élément localisé de fixation mécanique additionnelle (2₁, 2₂) est situé au niveau d'une jonction de collage entre ladite glace (3) et ledit boîtier (4).

7. Dispositif d'éclairage et/ou signalisation selon la revendication 6, **caractérisé en ce qu'**il comprend une pluralité d'éléments localisés de fixation mécanique additionnelle (2₁, 2₂) qui sont répartis sur un contour dudit boîtier (4) au niveau de ladite jonction de collage.

8. Dispositif d'éclairage et/ou signalisation pour véhicule automobile selon l'une quelconque des revendications 5 à 7, **caractérisé en ce que** ledit élément localisé de fixation mécanique additionnelle (2₁, 2₂) comprend également un tenon (30) venu de matière de ladite glace (3), et **en ce que** ladite portion thermofondue-matricée (40) fait partie intégrante dudit boîtier (4),
ladite portion thermofondue-matricée (40) entourant ledit tenon (30) dans une relation apte à garantir ladite fixation mécanique additionnelle entre ledit boîtier (4) et ladite glace (3).

9. Dispositif d'éclairage et/ou signalisation selon la revendication 8, **caractérisé en ce que** ledit tenon (30) a une surface extérieure et/ou une forme extérieure facilitant un accrochage mécanique avec ladite portion thermofondue-matricée (40).

10. Dispositif d'éclairage et/ou signalisation selon l'une quelconque des revendications 5 à 9, **caractérisé en ce qu'**il comprend également au moins un élément encliquetable (2c) assurant une fixation mécanique additionnelle entre ledit boîtier (4) et ladite glace (3).

11. Dispositif d'éclairage et/ou signalisation selon la revendication 10, **caractérisé en ce que** ledit élément encliquetable (2c) comporte une portion (31) collée au moyen d'une colle à durcissement rapide, ladite portion collée (31) s'opposant à un désengagement dudit élément encliquetable (2c) et corrélativement à une séparation dudit boîtier (4) et de ladite glace (3).

12. Dispositif d'éclairage et/ou signalisation selon l'une quelconque des revendications 5 à 11, **caractérisé en ce que** ledit boîtier (4) est réalisé dans un matériau à base de polypropylène (PP) et ladite glace (3) est réalisée dans un matériau à base de polycarbonate (PC).

13. Dispositif d'éclairage et/ou signalisation selon l'une quelconque des revendications 5 à 12, **caractérisé en ce que** ledit boîtier (4) et ladite glace (3) sont réalisés dans des matériaux compatibles pour une soudure au moins partielle par thermofusion.
